# EUROPEAN PATENT SPECIFICATION

(11) **EP 1 529 895 B1**
(45) Date of publication and mention of the grant of the patent: **29.08.2012**
(21) Application number: 04023033.6
(22) Date of filing: 28.09.2004
(51) Int. Cl.: E04D 3/35, B32B 7/02

(54) **Panel particularly for insulating a loft slab**
Panel, insbesondere zur Isolierung von Dachstuhlplatten
Panneau destiné notamment à l'isolation de dalles pour greniers

(30) Priority: 27.10.2003 IT TV20030142
(43) Date of publication of application: 11.05.2005
(73) Proprietor: Silcart S.p.A., 31030 Carbonera, Frazione Mignagola TV (IT)
(72) Inventor: Faotto, Ugo, 31100 Treviso (IT)
(74) Representative: Modiano, Micaela Nadia

(56) References cited:
- WO-A2-89/03762
- DE-A1- 2 102 376
- US-A- 4 469 731

## Description

The present invention relates to a panel particularly for insulating a loft slab.

Roofing structures commonly used to cover buildings of various kinds use, for example, mutually adjacent tiles; however, such tiles do not ensure waterproofing of the loft slab, since they allow water to pass in the gaps that form inevitably between them after laying them.

Currently it is known to try to waterproof the loft slab by arranging, below the tiles, sheaths commonly known as tile backing sheaths, which are designed to prevent water, once it has infiltrated below the tiles, from reaching the floor slab or the thermal insulation elements arranged above it, causing in the long term considerable damage to the building.

These known solutions further use a thermal insulation element, such as for example a layer of polyurethane, which is arranged above the loft slab and to which waterproofing elements, generally constituted by sheets of polyester or polypropylene, are applied; a covering element, generally made of a material that has the structure of a non-woven fabric, commonly termed NWF, is superimposed on the waterproofing elements.

The purpose of these known solutions is to ensure a high waterproofing of the roof.

A covering element is also known which can be used to provide a tile backing sheath and is constituted by a layer of fabric or felt to which protective layers are applied on both sides, the protective layers being obtained starting from initial components that are liquid or contain liquid parts, and having, on one side, a covering composed of inorganic powdery materials and binding agents, which are present in precisely defined ratios with respect to the dry weight of the covering.

Some known embodiments of this material use high percentages of inorganic materials, which also provide good fire resistance.

This known covering material can also be spread, in its upper region, with components that have a bituminous base, so that it is possible to apply thereto an additional protective sheath, generally by means of a process known as torching.

The main drawback of these conventional solutions is that the waterproofing layers or sheaths are generally applied at the building site, during the construction of the building of the loft, accordingly requiring the use of specialized labor and considerable construction times.

Another drawback of known solutions is that if the protective sheath is connected by torching, any presence of water makes the process difficult.

Another important drawback is that the use of high percentages of inorganic material, with a consequent reduction in the organic binding component, can lead over time to cracking and flaking of the tile backing.

Another drawback that arises from the use of components having a bituminous base is that the components give the waterproofing elements a high resistance to water but at the same time allow low breathability and therefore constitute a high barrier to the passage of vapor from the inside of the building toward the outside environment.

Another drawback of the above-mentioned known solutions is that they offer poor dimensional stability, mainly due to the limited sealing properties of the coupling between the insulating substrate and the protective sheath.

Another drawback is the possibility of emitting, during torching, vapors that can be noxious or can cause discomfort for the installer.

WO 89/03762 A2 discloses a roofing insulation panel which comprises an upper vapour permeable weatherproof membrane 1 with a layer of woven glassfibre 2 immediately therebelow, a lower aluminium sheet layer 4, and an intermediate polyurethane foamed insulation layer 3 which bonds the various materials together.

The aim of the present invention is to solve the above-mentioned problems, eliminating the drawbacks of the cited background art, by providing a panel, particularly for insulating a loft slab, that allows to reduce labor costs by limiting the operations required for on-site installation with respect to known systems in use while ensuring high waterproofing and high vapor permeability.

Within this aim, an object of the invention is to provide a panel that ensures optimum dimensional stability.

Another object is to provide a panel that has good workability characteristics.

A further object is to provide a panel that ensures good behavior with respect to fire resistance.

A still further object of the invention is to ensure walkability and health protection during its handling.

Another object is to provide a panel that is structurally simple and has a low production cost.

In accordance with the invention, there is provided a panel particularly for insulating a loft slab, as defined in the appended claims.

Further characteristics and advantages of the present invention will become better apparent from the following detailed description of two particular but not exclusive embodiments thereof, illustrated by way of non-limiting example in the accompanying drawings, wherein:

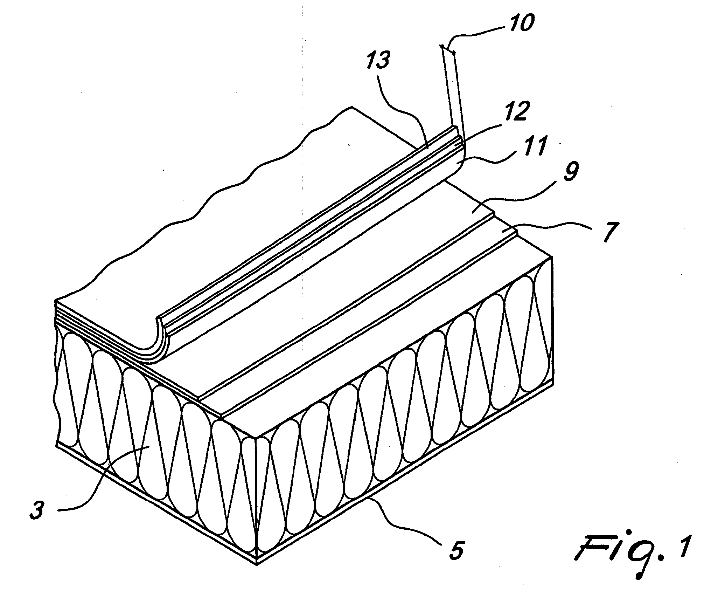

Figure 1 is a perspective view of a portion of the panel according to the invention, in which one end of the second layer is partially raised for easier comprehension;
Figure 2a is a sectional view of a first embodiment of the panel according to the invention;
Figure 2b is an enlarged view of the upper region;
Figure 3a is a sectional view of a second embodiment of the panel according to the invention;
Figure 3b is an enlarged view of the upper region;
Figure 4a is a sectional view of a third embodiment of the panel according to the invention;
Figure 4b is an enlarged view of the upper region.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

With reference to the figures, a panel 1, particularly for insulating a loft slab 2, comprises a thermally insulating substrate 3 of the type commonly used in the building sector, constituted for example by means of a polyurethane-based or fibrous insulating material or of any of the commonly used thermally insulating materials.

A vapor arrester or barrier 5 is coupled to a lower surface 4 of the thermally insulating substrate 3 and is provided for example by means of bituminized feltpaper, aluminized paper, or compounds comprising aluminum, paper and one of the following materials: polyethylene (PE), polypropylene (PP), polyester (PET), polyvinyl chloride (PVC), or ethyl vinyl acetate (EVA).

A structural element 7 is applied to an upper face 6 of the thermally insulating substrate 3 and is made for example of glass fabric, by means of a glass fiber web, nets or fabrics made of composite materials or grids.

A first layer 8 of the panel 1 according to the invention is thus formed which accordingly comprises the vapor barrier or arrester 5, the thermally insulating substrate 3, and the structural element 7, which are arranged one on top of the other in the order described here.

A first film of adhesive material 9 is superimposed on the first layer 8 and is adapted to couple to said first layer a second layer 10 so as to provide a single and compact panel structure 1.

Such second layer 10 comprises a membrane 11 that is permeable to vapor and impermeable to water and is constituted for example by a polyolefin-based or otherwise synthetic film and is microporous and breathable by mechanical or chemical osmosis.

Advantageously, such material can contain components capable of acting as flame retardants or flameproofing agents, so as to ensure that the panel 1 has overall fire-resistance properties that can be classified according to currently applicable standards.

A covering element 13 is fixed to the upper surface of the membrane 11 by interposing a second film 12 made of adhesive material; the covering element 13 constitutes the upper region of the second layer 10 of the panel 1, providing a protection to the membrane 11 and allowing walkability of the panel 1 without damaging said membrane.

The covering element 13 can be provided conveniently by way of the known materials whose structure is known as "non-woven fabric" or NWF, such as for example polypropylene NWF, polyester NWF, composite NWFs, or fabrics made of natural fibers, all generally permeable to water.

Optionally, the covering element 13, too, can contain components that act as flame retardants or flameproofing agents, so as to increase the overall fire-resistance of the panel 1, which can reach for example fire-resistance classes M1 and B2 according to the DIN 4102 standard.

The covering element 13 can further have, on its upper surface, antislip systems designed to ensure easier walkability of the panel 1, such as for example applied adhesive elements, relief profiled elements, or relief prints.

Optionally, another protective element, not shown in the figure, can be applied over the covering element 13, with the purpose of protecting the covering element particularly during the laying of the panel 1.

The protective element can be provided for example by means of a sheet of NWF material or a layer of hot-spreadable material.

The first and second films of adhesive material 9 and 12 are provided by using an adhesive that has good dimensional stability, is thermally stable even at temperatures on the order of 110-180 °C, and is irreversible with respect to heat and immersion in water.

This performance can be provided by means of an adhesive that is composed by 2-3% of a tin-based organic catalyst, 2-3% of a silanizing adhesion promoter, 10-12% of reinforcing fibers, and of a silane-terminated polyurethane resin for the remainder.

Dimensional stability and stability to temperature variations, in addition to ensuring good adhesion in any conditions of use, reduces the possibility that the components of the panel, particularly the membrane 11 and the covering element 13, might tear or break.

The presence of the second layer 10 constitutes, during the handling of the panel, a protection of the health of the personnel assigned to this operation, constituting a barrier between potentially dangerous substances and the outside environment.

The covering element 13 may further bear different personalized colorings or prints, so as to make the panel 1 aesthetically pleasant once installed.

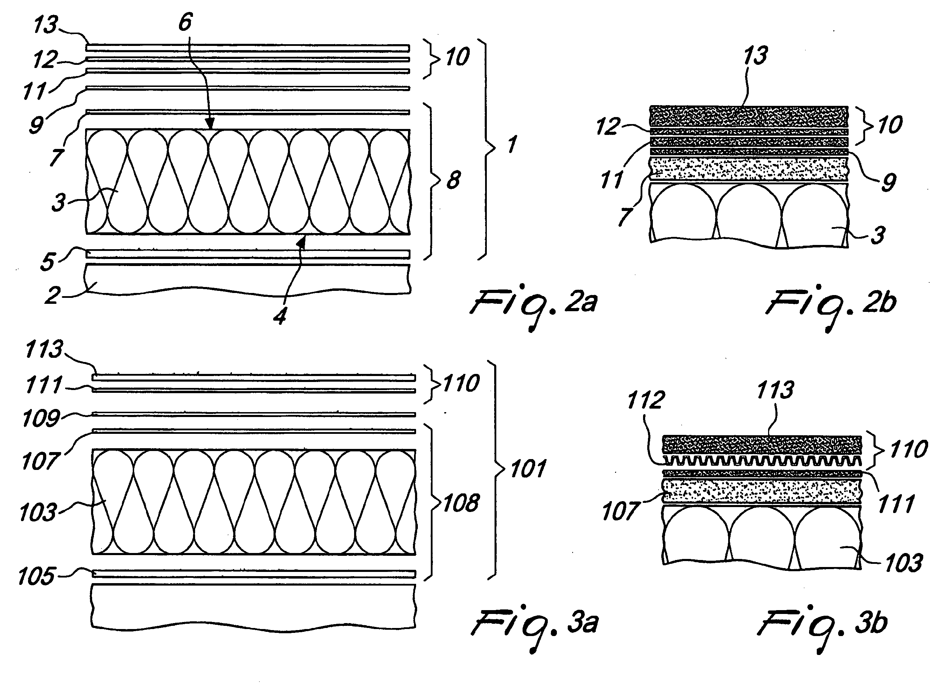

Figures 3a and 3b illustrate a second embodiment of the panel according to the invention, generally designated by the reference numeral 101, which differs from the first embodiment in that the coupling between the membrane 111 and the covering element 113, which constitute the second layer 110, is provided by calendering, therefore without interposing a second film of adhesive material.

The coupling to a first layer 108, constituted by a vapor barrier or arrester 105, a thermally insulating substrate 103 and a structural element 107, occurs, in a manner fully similar to what has been described above, by interposing a first film of adhesive material 109, so to provide a single compact panel 101.

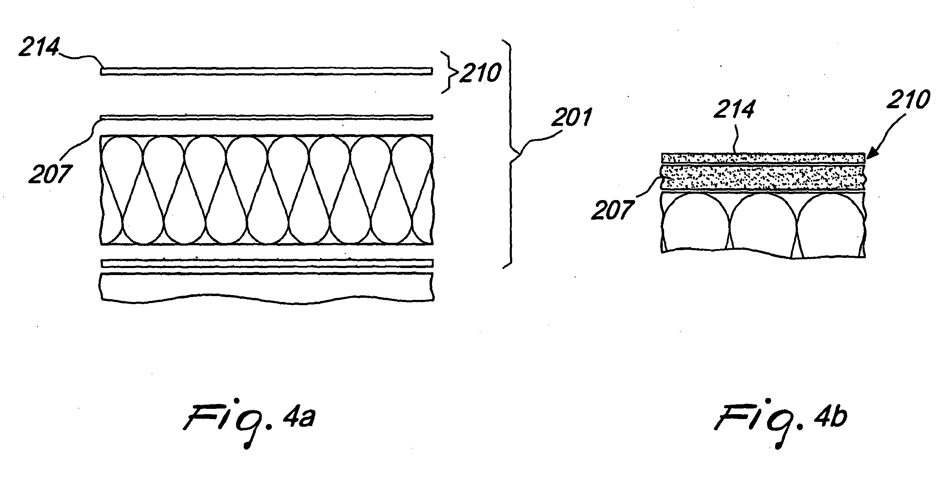

According to a third embodiment of the panel 201, shown in Figures 4a and 4b, the second layer 210 is constituted by a third film 214, which is conveniently provided by means of an engineering polymer that has excellent waterproofing properties and high vapor permeability.

Advantageously, the third film 214 can be provided by means of an engineering polymer such as for example polyurethane or polyethylene or polyester, and can be applied by spreading, spraying or extrusion directly onto the underlying structural element 207.

The engineering polymers ensure very high impermeability to water, at the same time ensuring excellent vapor permeability, so that the panel is particularly adapted for the insulation of loft slabs, floors, walls and other structural elements of a building.

The second embodiment further offers very high structural compactness, by way of the perfect adhesion of the third film 214 made of engineering polymer on the underlying structural element 207, further ensuring high thermal and dimensional stability.

All of the embodiments described above thus provide a monolithic and compact panel, which can be used directly to insulate floors, walls and other structural elements of a building and to provide tile backings.

Laying the panel according to the invention is therefore very quick, since it eliminates the need to apply on-site any one of the known types of protective sheath over a thermally insulating substrate, as is instead common practice at present.

The operation of the panel of the invention, once installed, is as follows: the water vapor that originates from the inside of the building, when it makes contact with the vapor arrester or barrier 5, condenses and is absorbed by osmosis by the thermally insulating substrate 3, inside which it rises by capillary action up to the upper region, from which it can migrate outward by passing through the structural element 7, the vapor-permeable and waterproof membrane 11, and the covering element 13.

In the opposite direction, instead, any water that infiltrates below the tiles is blocked by the vapor-permeable and waterproof membrane 11 so that it cannot reach the lower layers of the panel and cause significant damage to the building.

If the second layer is constituted by the third film made of engineering polymer, the functions of barrier with respect to water arriving from outside and of being breathable with respect to the vapor generated inside the building are both performed by said film.

It has thus been found that the invention has achieved the intended aim and objects, a panel having been provided which is capable of ensuring at the same time excellent characteristics of vapor-breathability and waterproofing as well as thermal insulation by way of the presence of the thermally insulating substrate 3.

The panel can be installed advantageously without requiring the application of additional protective elements, thus reducing labor costs.

Another object achieved by the invention is that the materials used, particularly to provide the films made of adhesive material, and the provision of the adhesive bonding between the first and second layers during the production of the panel, give the invention a higher thermal and dimensional stability than commonly used systems.

The presence of the structural element 7 further allows the panel 1 to be walkable, facilitating installation and any repairs.

Another object achieved by the invention is that it has workability characteristics that are comparable with those of the bituminous and mineralized products commonly used.

Another object achieved by the invention is assurance of high fire-resistance, which can be modulated according to the required application.

The invention is of course susceptible of numerous modifications and variations, all of which are within the scope of the appended claims.

Thus, for example, it is possible to provide a panel that is composed of a first layer provided by means of a fiber-based panel commonly used in building practice, on which a second layer provided by means of the indications given above is superimposed and associated, for example by means of a film of adhesive material as described above.

In this manner, the vapor-permeability, waterproofing, walkability and health-protection properties that are typical of said second layer can be given to a wide range of fiber-based panels, thus extending their range of use.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A panel (1;101) particularly for insulating a loft slab (2), comprising a thermally insulating substrate (3;103) coupled, in a lower region (4), to a vapor barrier or arrester (5;105), a structural element (7;107) coupled to an upper region (6) of said substrate (3;103) so as to form a first layer (8;108), which in turn is coupled, by way of a first film (9;109) of an adhesive material, to a second layer (10; 110), which is composed of a membrane (11;111) that is permeable to vapor and impermeable to water and a breathable covering element (13;113), said vapor barrier or arrester (5;105) being configured in said panel (1;101) to condense water vapor from the inside of a building which is then absorbed by osmosis by the thermally insulating substrate (3;103) inside which the condensed water rises by capillary action to said upper region (6) from which it passes outwardly through said structural element (7;107), said first film (9;109) of adhesive material, said vapor permeable and waterproof membrane (11;111), and said covering element (13;113), said vapor barrier or arrester (5;105) is made of bituminized feltpaper, aluminized paper, or compounds comprising aluminum, paper and one among the following materials: polyethylene (PE), polypropylene (PP), polyester (PET), polyvinyl chloride (PVC), or ethyl vinyl acetate (EVA).

2. The panel (1;101) according to claim 1, **characterized in that** said thermally insulating substrate (3;103) is provided by means of a fiber-based panel.

3. The panel (1) according to claims 1 or 2, **characterized in that** said membrane (11) and said covering element (13) are mutually coupled by interposing a second film (12) of adhesive material.

4. The panel (101) according to claims 1 or 2, **characterized in that** said membrane (111) and said covering element (113) are mutually coupled by calendering.

5. The panel (1;101) according to claim 3, **characterized in that** said first and second films (9,12;109) are provided by means of an adhesive material containing 2 to 3% of a tin-based organic catalyst, 2 to 3% of a silanizing adhesion promoter, 10 to 12% of reinforcing fibers, and a silane-terminated polyurethane resin for the remainder.

6. The panel (1;101) according to one or more of the preceding claims, **characterized in that** said thermally insulated substrate (3;103) is made of a fibrous mineral insulating material or of any thermally insulating material.

7. The panel (1;101) according to one or more of the preceding claims, **characterized in that** said structural element (7;107) is made of glass fabric, by means of a web of glass fiber, nets or fabrics made of composite materials or grids.

8. The panel (1;101) according to one or more of the preceding claims, **characterized in that** said vapor-permeable and water-impermeable membrane (11;111) is constituted by a polyolefinbased or otherwise synthetic film.

9. The panel (1;101) according to one or more of the preceding claims, **characterized in that** said membrane (11;111) contains flame-retardant or flameproof components.

10. The panel (1;101) according to one or more of the preceding claims, **characterized in that** said covering element (13;113) is made of polypropylene NWF, polyester NWF, composite NWFs, or fabrics made of natural fibers.

11. The panel (1;101) according to one or more of the preceding claims, **characterized in that** said covering element (13;113) contains flame-retardant or flameproof components.

12. The panel (1;101) according to one or more of the preceding claims, **characterized in that** said covering element (13;113) has, on its upper surface, antislip systems provided by means of applied adhesive elements, relief profiled elements, or relief prints.

13. The panel (1;101) according to one or more of the preceding claims, **characterized in that** said covering element (13;113) has printing with an aesthetic purpose on its upper surface.

14. The panel (1;101) according to one or more of the preceding claims, **characterized in that** it comprises a protective element that can be applied over said covering element (13;113) and is provided by means of a sheet of NWF material or a layer of hot-spreadable material.

## Patentansprüche

1. Paneel (1; 101), insbesondere zum Isolieren einer Dachstuhlplatte (2), aufweisend ein thermisch isolierendes Substrat (3; 103), das in einem unteren Bereich (4) mit einer Dampfbarriere oder-sperre (5; 105) verbunden ist, wobei ein Strukturelement (7; 107) mit einem oberen Bereich (6) des Substrats (3; 103) verbunden ist, so dass eine erste Schicht (8; 108) gebildet ist, die ihrerseits mittels eines ersten Films (9; 109) eines Klebstoffmaterials mit einer zweiten Schicht (10; 110) verbunden ist, welche aus einer Membran (11; 111), die dampfdurchlässig und wasserundurchlässig ist, und einem atmungsfähigen Deckelement (13; 113) besteht, wobei die Dampfbarriere oder - sperre (5; 105) in dem Paneel (1; 101) konfiguriert ist, um Wasserdampf aus dem Inneren eines Gebäudes zu kondensieren, der dann durch Osmose durch das thermisch isolierende Substrat (3; 103) absorbiert wird, wobei in dessen Innerem das kondensierte Wasser durch Kapillarwirkung in den oberen Bereich (6) hochsteigt, aus dem es durch das Strukturelement (7; 107), den ersten Film (9; 109) des Klebstoffmaterials, die dampfdurchlässige und wasserdichte Membran (11: 111) und das Deckelement (13; 113) nach außen hindurchgeht, wobei die Dampfbarriere oder-sperre (5; 105) aus bituminierter Filzpappe, aluminisiertem Papier, oder aus Verbundstoffen besteht, die Aluminium, Papier und eines der folgenden Materialien beinhalten: Polyethylen (PE), Polypropyfen (PP), Polyester (PET), Polyvinylchlorid (PVC), oder Ethylvinylacetat (EVA).

2. Paneel (1; 101) nach Anspruch 1, **dadurch gekennzeichnet, dass** das thermisch isolierende Substrat (3; 103) durch ein faserbasiertes Paneel bereitgestellt wird.

3. Paneel (1) nach Anspruch 1 oder 2, **dadurch gekennzeichnet, dass** die Membran (11) und das Deckelement (13) miteinander dadurch verbunden sind, dass dazwischen ein zweiter Film (12) von Klebstoffmaterial angeordnet ist.

4. Paneel (101) nach Anspruch 1 oder 2, **dadurch gekennzeichnet, dass** die Membran (111) und das Deckelement (113) miteinander durch Kalandrieren verbunden sind.

5. Paneel (1; 101) nach Anspruch 3, **dadurch gekennzeichnet, dass** die ersten und zweiten Filme (9, 12; 109) mittels eines Klebstoffmaterials vorgesehen sind, das 2 bis 3 % eines zinnbasierten organischen Katalysators, 2 bis 3 % eines silanisierenden Adhäsionspromotors, 10 bis 12 % Verstärkungsfasern und zum restlichen Teil silenterminiertes Polyurethanharz enthält.

6. Paneel (1; 101) nach einem oder mehreren der vorhergehenden Ansprüche, **dadurch gekennzeichnet, dass** das thermisch isolierende Substrat (3; 103) aus einem Mineralfaser-Isoliermaterial oder einem beliebigen thermisch isolierenden Material besteht.

7. Paneel (1; 101) nach einem oder mehreren der vorhergehenden Ansprüche, **dadurch gekennzeichnet, dass** das Strukturelement (7; 107) aus einem Glastextilmaterial hergestellt ist, mittels einer Glasfaserbahn, Netzen oder Textilmaterial aus Kompositmaterialien oder Gittern.

8. Paneel (1; 101) nach einem oder mehreren der vorhergehenden Ansprüche, **dadurch gekennzeichnet, dass** die dampfdurchlässige und wasserundurchlässige Membran (11; 111) durch einen Polyolefin-basierten oder einen anderen Kunststofffilm gebildet ist.

9. Paneel (1; 101) nach einem oder mehreren der vorhergehenden Ansprüche, **dadurch gekennzeichnet, dass** die Membran (11; 111) flammenhemmende oder flammensichere Bestandteile enthält.

10. Paneel (1; 101) nach einem oder mehreren der vorhergehenden Ansprüche, **dadurch gekennzeichnet, dass** das Deckelement (13; 113) aus Polypropylen-NWF (Faservlies), Polyester-NWF, Komposit-NWFs, oder aus Textilmaterial besteht, das aus Naturfasern hergestellt ist.

11. Paneel (1; 101) nach einem oder mehreren der vorhergehenden Ansprüche, **dadurch gekennzeichnet, dass** das Deckelement (13; 113) flammenhemmende oder flammensichere Bestandteile enthält.

12. Paneel (1; 101) nach einem der mehreren der vorhergehenden Ansprüche, **dadurch gekennzeichnet, dass** das Deckelement (13; 113) auf seiner oberen Fläche Antirutsch-Systeme aufweist, die mittels aufgebrachter Klebstoffelemente, reliefartig profilierten Elementen oder Reliefdrucken vorgesehen sind.

13. Paneel (1; 101) nach einem oder mehreren der vorhergehenden Ansprüche, **dadurch gekennzeichnet, dass** das Deckelement (13; 113) eine Bedruckung mit ästhetischem Zweck auf seiner oberen Fläche aufweist.

14. Paneel (1; 101) nach einem oder mehreren der vorhergehenden Ansprüche, **dadurch gekennzeichnet, dass** es ein Schutzelement aufweist, das über das Deckelement (13; 113) aufgebracht werden kann und mittels einer Lage von NWF-Material oder einer Lage von warm verstreichbarem Material vorgesehen ist.

## Revendications

1. Panneau (1; 101) destiné en particulier à isoler une dalle de combles (2), comprenant un substrat thermiquement isolant (3 ; 103) couplé, dans une région inférieure (4), à un pare-vapeur ou écran pare-vapeur (5 ; 105), un élément structurel (7 ; 107) couplé à une région supérieure (6) dudit substrat (3 ; 103) afin de former une première couche (8 ; 108), qui à son tour est couplée, au moyen d'un premier film (9 ; 109) en matière adhésive, à une seconde couche (10 ; 110), qui est composée d'une membrane (11 ; 111) qui est perméable à la vapeur et imperméable à l'eau et un élément de recouvrement respirant (13 ; 113), ledit pare-vapeur ou écran pare-vapeur (5 ; 105) étant configuré dans ledit panneau (1 ; 101) pour condenser la vapeur d'eau depuis l'intérieur d'un bâtiment qui est ensuite absorbée par osmose par le substrat thermiquement isolant (3 ; 103) à l'intérieur duquel l'eau condensée monte par capillarité vers ladite région supérieure (6) depuis laquelle elle passe vers l'extérieur à travers ledit élément structurel (7 ; 107), ledit premier film (9 ; 109) en matière adhésive, ladite membrane perméable à la vapeur et étanche à l'eau (11 ; 111) et ledit élément de recouvrement (13 ; 113), ledit pare-vapeur ou écran pare-vapeur (5 ; 105) étant fabriqué à partir de carton-feutre bituminé, de papier aluminé ou de composés comprenant de l'aluminium, du papier et l'un parmi les matériaux suivants : polyéthylène (PE), polypropylène (PP), polyester (PET), polychlorure de vinyle (PVC) ou acétate éthylvinylique (EVA).

2. Panneau (1 ; 101) selon la revendication 1, **caractérisé en ce que** ledit substrat thermiquement isolant (3 ; 103) est fabriqué au moyen d'un panneau à base de fibres.

3. Panneau (1) selon les revendications 1 ou 2, **caractérisé en ce que** ladite membrane (11) et ledit élément de recouvrement (13) sont couplés mutuellement en intercalant un second film (12) en matière adhésive.

4. Panneau (101) selon les revendications 1 ou 2, **caractérisé en ce que** ladite membrane (111) et ledit élément de recouvrement (113) sont couplés mutuellement par calandrage.

5. Panneau (1 ; 101) selon la revendication 3, **caractérisé en ce que** lesdits premier et second films (9, 12 ; 109) sont fabriqués au moyen d'une matière adhésive contenant 2 à 3 % de catalyseur organique à base d'étain, de 2 à 3 % de promoteur d'adhérence aux silanes, de 10 à 12 % de fibres de renforcement, et d'une résine de polyuréthane à terminaison silane pour le reste.

6. Panneau (1 ; 101) selon une ou plusieurs des revendications précédentes, **caractérisé en ce que** ledit substrat isolé thermiquement (3 ; 103) est fabriqué à partir d'un matériau isolant minéral fibreux ou de n'importe quel matériau thermiquement isolant.

7. Panneau (1 ; 101) selon une ou plusieurs des revendications précédentes, **caractérisé en ce que** ledit élément structurel (7 ; 107) est fabriqué à partir de toile de verre, au moyen d'une bande de fibre de verre, de filets ou de tissus composés de matériaux composites ou grilles.

8. Panneau (1 ; 101) selon une ou plusieurs des revendications précédentes, **caractérisé en ce que** ladite membrane perméable à la vapeur et imperméable à l'eau (11 ; 111) est constituée par un film synthétique à base de polyoléfine ou autre.

9. Panneau (1 ; 101) selon une ou plusieurs des revendications précédentes, **caractérisé en ce que** ladite membrane (11 ; 111) contient des composants à combustion lente ou ignifugés.

10. Panneau (1 ; 101) selon une ou plusieurs des revendications précédentes, **caractérisé en ce que** ledit élément de recouvrement (13 ; 113) est fabriqué à partir de polypropylène NWF, de polyester NWF, de composites NWF ou de tissus composés de fibres naturelles.

11. Panneau (1 ; 101) selon une ou plusieurs des revendications précédentes, **caractérisé en ce que** ledit élément de recouvrement (13 ; 113) contient des composants à combustion lente ou ignifugés.

12. Panneau (1 ; 101) selon une ou plusieurs des revendications précédentes, **caractérisé en ce que** ledit élément de recouvrement (13 ; 113) comprend, sur sa surface supérieure, des systèmes antidérapants fabriqués au moyen d'éléments adhésifs appliqués, d'éléments profilés en relief ou de gravures en relief.

13. Panneau (1 ; 101) selon une ou plusieurs des revendications précédentes, **caractérisé en ce que** ledit élément de recouvrement (13 ; 113) comporte une impression à visée esthétique sur sa surface supérieure.

14. Panneau (1 ; 101) selon une ou plusieurs des revendications précédentes, **caractérisé en ce qu'**il comprend un élément de protection qui peut être appliqué sur ledit élément de recouvrement (13 ; 113) et est fabriqué au moyen d'une feuille de matériau NWF ou d'une couche de matériau étalable à chaud.
